(19) Europäisches Patentamt
European Patent Office
Office européen des brevets

(11) Veröffentlichungsnummer: **0 029 583**
**B1**

(12) # EUROPÄISCHE PATENTSCHRIFT

(45) Veröffentlichungstag der Patentschrift: **24.11.82**

(51) Int. Cl.³: **C 01 B 17/58**

(21) Anmeldenummer: **80107194.5**

(22) Anmeldetag: **19.11.80**

(54) **Verfahren und Vorrichtung zur Aufarbeitung von Abfallschwefel-säuren, Säureteeren etc. unterschiedlicher Zusammensetzung und Konsistenz.**

(30) Priorität: **24.11.79 DE 2947497**

(43) Veröffentlichungstag der Anmeldung: **03.06.81 (Patentblatt 81/22)**

(45) Bekanntmachung des Hinweises auf die Patenterteilung: **24.11.82 Patentblatt 82/47**

(84) Benannte Vertragsstaaten: **FR GB IT NL**

(56) Entgegenhaltungen:
**DE C 626 481**
**DE C 627 327**
**DE C 628 847**
**DE C 960 184**
**DE C 1 130 417**
**US A 1 900 239**
**US A 2 115 091**

(73) Patentinhaber: **Grillo-Werke AG**
**Postfach 11 01 09**
**D-4100 Duisburg-Hamborn (DE)**

(72) Erfinder: **Lowicki, Norbert, Dr. Ing.**
**Walramsweg 26**
**D-4100 Duisburg 1 (DE)**
Erfinder: **Wolf, Joachim**
**Dahlmannstrasse 20**
**D-4100 Duisburg 11 (DE)**
Erfinder: **Schwarz, Wolfgang**
**Hermannstrasse 10**
**D-4100 Duisburg 11 (DE)**

(74) Vertreter: **Werner, Hans-Karsten, Dr. et al.**
**Deichmannhaus am Hauptbahnhof**
**D-5000 Köln 1 (DE)**

**EP 0 029 583 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

# Verfahren und Vorrichtung zur Aufarbeitung von Abfallschwefel-säuren, Säureteeren etc. unterschiedlicher Zusammensetzung und Konsistenz

Die Erfindung betrifft ein Verfahren und eine Vorrichtung zur Aufarbeitung von Abfallschwefelsäuren, Säureteeren und ähnlichen Schwefel und Kohlenstoff enthaltenden Abfallprodukten unterschiedlicher Zusammensetzung und Konsistenz in einem mehrstufigen Verbrennungsofen.

Abfallschwefelsäuren und Säureteere (auch Säureharze genannt) fallen bei vielen Produktionsprozessen der organisch chemischen Industrie, insbesondere der petrochemischen Industrie, bei der Aufarbeitung von Altölen u.a. an. Ferner entstehen als Neben- und Abfallprodukte schwefelhaltige, organische Verbindungen, zum Teil vom Typ höherer Alkyl- und/oder Aryl-Mercaptane und -Thioäther, z.B. bei der Verarbeitung von Steinkohlenteer, wie auch bei der Herstellung von Zwischenprodukten der Kunststoff- und Farbstoffchemie.

Die Aufarbeitung aller dieser Abfallstoffe bzw. ihre umweltunschädliche Vernichtung, unter Rückgewinnung des Schwefels, ggf. unter Verwertung ihres Energie-Inhalts, bereiten wegen deren sehr unterschiedlichen physikalischen und chemischen Eigenschaften, also Konsistenz, Viskosität, Verbrennungswärme oder Spaltwärmeverbrauch etc., große Schwierigkeiten.

In der Vergangenheit wurden derartige Neben- bzw. Abfallprodukte vielfach — nach Neutralisation — deponiert, ins Abwasser gegeben oder in küstennahen Gewässern verklappt. Wegen der steigenden Mengen derartiger Abfallstoffe und ihrer Umweltrelevanz ist ein solches Vorgehen heutzutage nicht mehr möglich.

Die geschilderte umweltschädigende Beseitigung der genannten Abfallstoffe ist bis in die jüngste Vergangenheit hinein noch immer vorgenommen worden obwohl schon seit langem und wiederholt Verfahren beschrieben worden sind, die eine Aufarbeitung dieser Abfallprodukte bezweckt haben.

So ist z.B. aus der DE-C-626 481 bekannt, Abfallschwefelsäuren mit auf 300-350 °C erhitzten festen Wärmeträgern, wie Sand, verbrauchten Bleicherden und/oder granuliertem Koks, in speziellen Öfen zu mischen und dadurch die Abfallsäuren zu zersetzen. Nachteilig bei diesem Verfahren ist der Umstand, daß ein umlaufendes festes Material als Wärmeträger benötigt wird und daß die Abfallsäuren nicht rückstandslos aufgearbeitet werden können.

Weiterhin ist aus der DE-C-960 184 bekannt, Abfallschwefelsäuren allein oder in Mischung mit Säureteeren in stehende, ggf. auch liegende Zylinder, einzudüsen und dadurch zu zersetzen, wobei zur Aufrechterhaltung der Wärmebilanz gasförmige oder flüssige Brennstoffe, ggf. auch Schwefel, eingesetzt wurden. Diese Verfahrensweise hat den prinzipiellen Nachteil, daß damit nur Abfallsäuren von verhältnismäßig niedriger Viskosität und gleichmäßiger Zusammensetzung eingesetzt werden können. Hochviskose Säureteere können hierbei nur nach Mischung mit konzentrierter Schwefelsäure dem Ofen zugeführt werden. Diese mußte durch Eindampfen von verdünnter Abfallsäure auf die erforderliche hohe Konzentration gesondert gewonnen werden.

Es ist ferner bekannt, die Abfallsäure durch Einleitung eines auf 430-480 °C erhitzten Gases, das zu 75 % aus Wasserdampf besteht, zu zersetzen und die heißen Prozeßgase dann auf 15 °C abzukühlen. Hierdurch sollten Wasser sowie unzersetzte Kohlenwasserstoffdämpfe herauskondensiert und dann ein 95 %iges Schwefeldioxid gewonnen werden. Dieses Verfahren hat den prinzipiellen Nachteil, daß Kohlenwasserstoffe in Schwefeldioxid sehr gut löslich sind und auf diese Weise eine Trennung dieser beiden Komponenten unmöglich ist. Die Weiterverarbeitung eines derartigen $SO_2$ zu 100 %ig reinem Schwefeldioxid oder zu Schwefelsäure brachte unüberwindliche Schwierigkeiten.

Ein weiteres Verfahren, das bei der Aufarbeitung von Säureharzen und Abfallschwefelsäuren die Gewinnung von hochprozentigem Schwefeldioxid bzw. von Schwefelsäure daraus zum Ziel hatte, scheiterte an der außerordentlich schwierigen restlosen Verbrennung der Kohlenwasserstoffe in dem hierbei vorliegenden Gasgemisch. Dieses Verfahren arbeitet kontinuierlich mit der 15- bis 30 fachen Menge eines zermahlenen und auf 230 und 300 °C erhitzten Kokses, mit dem die Abfallsäuren gemischt wurden. Der Koks wurde hierbei direkt erhitzt und der Kreislauf desselben mittels Förderschnecken und Hubförderern bewerkstelligt. Bei diesem Verfahren trat in der Praxis noch der gravierende Mangel eines außerordentlich starken Verschleißes der Förderorgane durch den stark erosiven Koks hinzu.

Alle diese Verfahren haben sich in der Praxis nicht durchsetzen können, obwohl wiederholt auch verfahrenstechnisch erhebliche Anstrengungen gemacht wurden, um den Wärmehaushalt bei den Aufarbeitungsprozessen problemlos und sicher zu beherrschen.

Bei der Aufarbeitung von Abfallschwefelsäuren und Säureteeren ist eine nicht zu übersehende Schwierigkeit die, daß diese Säuren mit unterschiedlichen Gehalten an Kohlenstoff anfallen. Einerseits benötigt man mehr oder weniger zusätzliche Wärme zu ihrer Zersetzung, andererseits kann sich aber auch ein Überschuß an Wärme bei ihrer Zersetzung entwickeln, was vor allem auf die Säureharze und Säureteere zutrifft.

Trotz Einsatz zusätzlicher Brennstoffe, wie Heizöl, Gas oder auch Elementarschwefel kommt es oft vor, daß durch einen Wärmeunterschuß zeitweise eine unvollständige Zersetzung der Schwefelsäure bzw. des zunächst gebildeten $SO_3$ bewirkt wird. Andererseits aber bewirkt ein Überschuß an Kohlenstoff in den Abfallsäuren die Bildung von Koks, dessen Gegenwart die restlose Verbrennung der Kohlenwasserstoffe in dem Spaltgas verhindert. Die Verbrennung dieses Kokses geht nur zögernd vonstatten und liefert nicht im erforderlichen Umfang die für die Spaltung benötigte Wärme.

Es ist in diesem Zusammenhang wiederholt auch schon versucht worden (beispielsweise gemäß DE-C-627 327), mit zwei hintereinander geschalteten Drehrohröfen zu arbeiten und Spaltung sowie Verbrennung von überschüssigem Koks in getrennten Räumen durchzuführen und eine Wärmeübertragung durch Strahlung zu bewerkstelligen. Auch diese Arbeitsweise hat sich aber in der Praxis nicht durchgesetzt.

Ein weiteres Problem besteht darin, daß die oben genannten Abfallsäuren und Säureteere oft außerordentlich unterschiedliche Konsistenzen bzw. Viskositäten aufweisen. Es ist nahezu unmöglich, sie alle in so ausreichend feiner Verteilung in die Brennräume der Zersetzungsöfen einzudüsen, daß die feinen Tröpfchen in der Schwebe vollständig durchreagieren bzw. sich vollständig zersetzen können. Auch eine Vorerwärmung von z.B. Säureteeren und Säureharzen und die Anwendung hoher Verdüsungsdrücke ergibt keine für eine Zersetzung in der Schwebe ausreichend feine Verteilung, obwohl diese Verdüsung bei allen zur Zeit in der Praxis gebräuchlichen Abfallsäureverwertungsverfahren unerläßliche Voraussetzung ist. Infolge dessen ist die qualitative Bandbreite der mit Hilfe dieser Verfahren aufzuarbeitenden Abfallschwefelsäuren eng begrenzt und wird normalerweise auch nur auf bestimmte Sorten, die mit gleichmäßiger Viskosität und gleichmäßig hohen Kohlenstoff-Gehalten anfallen, angewendet.

Ein weiteres Problem aller bisher bekannten Säurespaltverfahren, die unter Einsatz von Öl und Gas im Temperaturbereich zwischen 1 000 und 1 200 Grad arbeiten ist die Bildung von Stickoxiden. Diese Stickoxide verunreinigen die aus den Spaltgasen erzeugte frische Schwefelsäure. Außerdem wird durch Umsatz an $SO_2$ mit Stickoxiden in einer « Bleikammerreaktion » die Bildung von schwer adsorbierbaren bzw. unkondensierbaren Schwefelsäurenebeln begünstigt, die eine Erhöhung schädlicher Emissionen von Schwefelsäurefabriken bewirken.

Die Erfindung hat sich die Aufgabe gestellt, Abfallschwefelsäuren, Säureteere und ähnliche Schwefel und Kohlenstoff enthaltende Abfallprodukte unterschiedlicher Zusammensetzung und Konsistenz so aufzuarbeiten, daß unabhängig von der Konsistenz bzw. Viskosität, dem schwankenden Gehalt an Kohlenstoff, Sohwefelsäure und in anderer Form gebundenem Schwefel gemeinsam oder in schnellem Wechsel in einem einzigen, kontinuierlich durchführbaren und einfach zu regulieredem verfahren aufzuarbeiten. Dabei wird eine vollständige Zersetzung des gesamten durch die Säurespaltung zunächst entstehenden Schwefeltrioxids, eine vollständige Verbrennung sämtlicher in die Gasform überführter Kohlenwasserstoffe sowie eine minimale Bildung von Stickoxiden bezweckt, wobei ein mehrstufiger Verbrennungsofen zur Anwendung kommt.

Diese Aufgabe wird dadurch gelöst, daß man

a) in einer ersten Stufe die Abfallschwefelsäure, Säureteere und ähnliche Schwefel- und Kohlenstoff enthaltenden Abfallprodukte unterschiedlicher Zusammensetzung und Konsistenz gegebenenfalls zusammen mit elementarem Schwefel in einem Drehrohrofen (5) auf ein Koksbett von mindestens 400 °C aufgibt und 25 bis 55 % der insgesamt für das Verfahren erforderlichen Luft als Primärluft einbläst, so daß entstehende reduzierende Gasgemisch und der hintere Teil des Koksbettes sich auf 800 bis 1 100 °C erwärmen, wobei der gegebenenfalls sich bildende überschüssige Koks am Ende des Drehrohrofens ausgetragen wird, das Gasgemisch

b) in einer zweiten Stufe, in einer Zwischenkammer (6) mit weiteren 10 bis 15 % der erforderlichen Luft zersetzt, wobei eine Raumgeschwindigkeit von 200 bis 400 $Nm^3$ Gas/$m^3$ Brennraum eingehalten wird und sich die Temperatur des Gasgemisches auf 1 150 bis 1 350 °C erhöht,

c) in einer dritten Stufe am Anfang einer Nachbrennkammer (9) weitere 20 bis 45 % der erforderlichen Luft zugibt, wobei eine Raumgeschwindigkeit von 50 bis 180 $Nm^3$ Gas/$m^3$ Brennraum eingehalten wird und sich das Gasgemisch auf 1 000 bis 1 200 °C abkühlt, und schließlich

d) in einer vierten Stufe etwa in der Mitte der nachbrennkammer (9) den Rest der erforderlichen Luft zugibt, wobei sich im hinteren Teil der Nachbrennkammer (9) Temperaturen von 1 000 bis 1 200 °C einstellen und eine Raumgeschwindigkeit von 150 bis 400 $Nm^3$ Gas/$m^3$ Brennraum eingehalten werden, woraufhin man das durchreagierte Gasgemisch in an sich bekannter Weise in einem Abhitzekessel abkühlt und vorzugsweise in einem Schwefelsäurekontaktverfahren zu Schwefelsäure aufarbeitet.

Zur Durchführung des Verfahrens verwendet man einen mehr stufigen Verbrennungsofen, welcher aus einem Drehrohrofen mit einem Koksbett, einer Zwischenkammer und einer Nachbrennkammer besteht und außer den Zuführungsleitungen für die Abfallsäuren, den Säureteer sowie gegebenenfalls ähnliche Schwefel- und Kohlenstoff enthaltende Abfallprodukte, gewünschtenfalls elementaren Schwefel und Primärluft, mehrere Zuleitungen für Sekundärluft enthält. Eine bevorzugte Gestaltung des Ofens ist in der anliegenden Figur 1 dargestellt. Hierin bedeutet

1. Zufuhr von Abfallsäuren .
2. Zufuhr von Säureteer u.a. Schwefel und Kohlenstoff enthaltenden Abfallprodukten
3. Zufuhr von elementarem Schwefel
4. Primärlufteinblasung
5. Drehrohrofen
6. Zwischenkammer
7. Koksaustrag
8. Sekundärlufteinblasung
9. Nachbrennkammer

10. Abhitzekessel
11. Spaltgas-Austritt

In dem Drehrohrofen (5) befindet sich ein Koksbett, welches auf mindestens 400 °C vorgewärmt ist. Die Abfallsäuren und der Säureteer sowie gegebenenfalls der elementare Schwefel werden am Anfang des Drehrohrofens direkt auf das Koksbett aufgegeben und führen zu einer Erwärmung des Koksbettes und des Gasgemisches beim Austritt aus den Drehrohrofen auf 800 bis 1 100 °C, vorzugsweise arbeitet man in der Weise, daß im Dauerbetrieb sich die Temperaturen des Koksbettes am Anfang auf ca. 500 und beim Austritt auf ca. 1 000 °C einstellen. Hierzu wird in Abhängigkeit der Ausgangsstoffe 25 bis 55 % der insgesamt für das Verfahren erforderlichen Luft als Primärluft eingeblasen. Im allgemeinen genügt es, 35-45 % der erforderlichen Luft als Primärluft einzublasen. Vorzugsweise setzt man hier etwa 40 % der Luft ein. Je nach Zusammensetzung der Ausgangsmaterialien bildet sich überschüssiger Koks, der am Ende des Drehrohrofens ausgetragen wird. Besonders bewährt hat sich ein Ringspalt (7) für den Austrag des überschüssigen Kokses. Dieser Koks kann gesammelt werden und gewünschtenfalls in Verfahrensphasen mit Koksverbrauch erneut in den Drehrohrofen eingegeben werden. Da sich der Koks im Drehrohrofen als Bewegtbett darstellt, verteilen sich die aufgegebenen Abfallsäuren, Säureteere, Säureharze etc. gleichmäßig auf und in dem Koks und können sich dort auch ohne Verdüsung zersetzen.

Luftzufuhr und Temperatur im Drehrohrofen werden so eingestellt, daß nur eine teilweise Verbrennung der kohlenstoffhaltigen Säureverunreinigungen erfolgt. Dies gilt auch für den Elementarschwefel, der in fester oder flüssiger Form von Fall zu Fall nur dann mitaufgegeben wird, wenn es der Wärmebedarf des Gesamtprozesses und/oder eine zu niedrige $SO_2$-Konzentration des gebildeten Spaltgases dieses erfordern. Auf jeden Fall wird angestrebt, stets nur eine so große Menge an Koks durch partielle Verbrennung der Kohlenwasserstoffe zu erzeugen, daß das Koksbett im Ofen in gleichmäßiger Höhe aufrecht erhalten bleibt.

Da das Koksbett zur Verteilung der aufgegebenen und aufgepumpten Abfallsäuren, Säureteere etc. dient, wird eine Verbrennung oder Zersetzung dieser Abfallsäuren unmittelbar auf der feuerfesten Auskleidung des Drehrohrofens vermieden. Eine Schädigung der feuerfesten Auskleidung des Ofens durch Säureeinwirkung wird auf diese Weise ausgeschlossen. Sofern ein Koksüberschuß erzeugt wird, wird dieser am Ofenende durch ein Überlaufwehr und den Ringspalt gegebenenfalls kontinuierlich ausgetragen.

Das Koksbett dient somit einerseits als Bewegtbett der beschleunigung und Vergleichmäßigung der Reaktionsführung, andererseits aber auch als Wärmespeicher und Wärmeregulator. Auf seiner Oberfläche und in ihm selbst laufen dauernd parallel eine Reihe wärmeliefernder und wärmeverbrauchender Reaktionen ab, die quantitativ bilanziert, bei konstanter Temperatur ihren Ausdruck in einer Koksbildung oder Koksverbrennung finden.

Als wärmeverbrauchende Prozesse können im allgemeinen genannt werden :

Die Verdampfung von Wasser aus verdünnten Schwefelsäuren :

$$H_2O\ \text{fl.} \longrightarrow H_2O\ (\text{d.}) + 44\,087\ \text{KJ/Mol}$$

Die Verdampfung und Spaltung von Schwefelsäure :

$$H_2SO_4\ \text{fl.} \longrightarrow H_2SO_4\ (\text{d.}) + 50\,103\ \text{KJ/Mol}$$
$$H_2SO_4\ \text{d.} \longrightarrow H_2O + SO_3 + 175\,887\ \text{KJ/Mol}$$

Die Spaltung von Kohlenwasserstoffen :

$$CH_3 - (CH_2)_x - CH_3 \longrightarrow C_x + (H_2)_x + 229\,437\ \text{KJ/Mol}$$

Das Schmelzen und Verdampfen von elementarem Schwefel :

$$S_{fest} \text{ — } S_{fl} \longrightarrow S_d + 1\,260\ \text{KJ/Mol}$$
$$+ 48\,600\ \text{KJ/Mol}$$

Wärmeverbrauchend wirkt ferner die Aufheizung der für die partielle Verbrennung erforderlichen und am Ofenkopf eingeblasenen « Primärluft ». Wärmeliefernde Reaktionen sind die folgenden :

$$2\,H_2 + O_2 \longrightarrow 2\,H_2O_d - 242\,000\ \text{KJ/Mol}$$
$$2\,C + O_2 \longrightarrow 2\,CO - 124\,350\ \text{KJ/Mol}$$
$$H_2 + S_d \longrightarrow H_2S - 82\,060\ \text{KJ/Mol}$$
$$CO + Sd \longrightarrow COS - 142\,650\ \text{KJ/Mol}$$
$$S + O_2 \longrightarrow SO_2 - 297\,140\ \text{KJ/Mol}$$

Innerhalb des Drehrohrofens entsteht also durch teilweise Verbrennung und Zersetzung ein Gemisch

brennbarer Gase, wie CO, COS, $H_2S$ und S-Dampf. Dieses Gas enthält außerdem, neben etwas $SO_2$, unzersetztes $SO_3$ wie $H_2O$.

Das aus dem Drehrohrofen (5) austretende Gasgemisch reduzierender und brennbarer Gase enthält vorwiegend CO, COS, $H_2S$, S-Dampf etwas $SO_2$, unzersetztes $SO_3$ sowie $H_2O$.

Beim Eintritt in die Zwischenkammer (6) wird in einer zweiten Stufe des Verfahrens 10 bis 15 % der erforderlichen Luft als Sekundärluft eingeblasen. Diese Luft kann an dieser Stelle auch aus der Atmosphäre angesaugt werden, wenn man im Ofen und in der Zwischenkammer einen definierten Unterdruck aufrechterhält.

Durch die Zuführung dieser Teilluftmenge setzt eine weitere Verbrennung ein, wodurch sich die Temperaturen auf 1 150 bis 1 350 °C, vorzugsweise 1 200 bis 1 300 °C erhöhen. Diese Temperaturen reichen aus, das noch vorhandene $SO_3$ zu zersetzen. Gleichzeitig wird aber noch der reduzierende Charakter des Gasstromes aufrechterhalten.

Die absolut vollständige Zersetzung des gesamten in dem Gas befindlichen $SO_3$ vermeidet Korrosionen im Abhitzekessel sowie Schwierigkeiten bei der Kühlung und der katalytischen Oxidation des Spaltgases äußerst zuverlässig.

Auch das bisher bei allen bekannten Säurespaltverfahren besonders schwierige Problem einer restlosen Verbrennung aller Kohlenwasserstoffe, die zusammen mit Abfallsäuren eingebracht werden, wird bei dem erfindungsgemäßen Verfahren ohne weiteres gelöst :

Durch die pyrolytische Spaltung höher molekularer Kohlenwasserstoffe im Drehrohrofen und weitergehend auch in der Zwischenkammer, wird die Entstehung schwer verbrennbarer Dämpfe höher siedender Kohlenwasserstoffe zuverlässig vermieden. in dem Gas, das aus der Zwischenkammer kommend in die Nachbrennkammer eintritt, sind außer Methan nur noch Spuren von $C_2$- und $C_3$-Kohlenwasserstoffen nachweisbar. Zur Durchführung des erfindungsgemäßen Verfahrens werden in der Zwischenkammer Raumgeschwindigkeiten von 200 bis 400 (vorzugsweise 220-360) $Nm^3$ $Gas/m^3$ Brennraum eingehalten. Eine gute Verwirbelung des Gases mit der Sekundärluft in der Zwischenkammer ist gewünscht. Beispielsweise durch ein Versetzen des Eingangs und Ausgangs der Zwischenkammer um 90° wird diese Verwirbelung begünstigt.

Aus der Zwischenkammer tritt das Gas unter Einblasung von weiteren 20 bis 45, vorzugsweise 25-35 % der erforderlichen Luft und intensiver Verwirbelung in die Nachbrennkammer (9) ein, einerseits durch Abkühlung durch die Luft, andererseits durch weitere Verbrennung stellen sich im Brennraum I Temperaturen von 1 000 bis 1 200 °C, vorzugsweise 1 100-1 150 °C ein. Hierbei werden Raumgeschwindigkeiten von 50 bis 180, vorzugsweise 80-150 $Nm^3$ $Gas/m^3$ Brennraum eingehalten. Durch Einblasen der restlichen erforderlichen Luftmenge etwa in der Mitte der Nachbrennkammer (9) werden auch im Brennraum II Temperaturen von 1 000 bis 1 200, vorzugsweise 1 100-1 150 °C eingehalten, wobei Raumgeschwindigkeiten von 150 bis 400, vorzugsweise 200-350 $Nm^3$ $Gas/m^3$ im Brennraum eingehalten werden.

Infolge der Gegenwart brennbarer Bestandteile des Spaltgases, vorzugsweise S-Dampf, $H_2S$, COS und CO erfolgt eine vollständige Verbrennung der noch vorhandenen Kohlenwasserstoffe. Die stark exotherme Oxidation von CO und $H_2S$ läuft unter Entwicklung folgender Wärmemengen ab :

$$2\,CO + O_2 \longrightarrow CO_2 - 285\,120\ KJ/Mol$$
$$3\,H_2S + 2\,O_2 \longrightarrow H_2O + SO_2 - 519\,000\ KJ/Mol$$

Die Nachverbrennung wird durch die Lufteinblasung an zwei Stellen der Nachbrennkammer (9) als gesteuerte « langflammige » Verbrennung durchgeführt. Diese langezogene Verbrennungszone bewirkt die restlose Oxidation aller reduzierenden Gaskomponenten, ohne daß es erneut zu Temperaturspitzen kommt, welche die Bildung von Stickoxiden verursachen.

Der jeweilige Zusatz an Sekundärluft bewirkt stets eine merkliche Temperaturverringerung, die dann durch die einsetzende Verbrennung kompensiert wird. Der Zusatz der einzelnen Teilsekundärluftmengen wird so gesteuert, daß jeweils hinter den einzelnen Einblaseebenen ein erneuter Temperaturanstieg des Gases erkennbar ist.

Es hat sich herausgestellt, daß nach Zusatz der Restmenge der Luft noch eine Verweilzeit von 1,5 bis 3, vorzugsweise 2,5 sec. eingehalten werden soll, ehe das Gas im Abhitzekessel abgekühlt wird. Die Gesamtverweilzeiten in den Vor- und Hauptverbrennungsräumen sollten zwischen 5 und 11, vorzugsweise 6-8,5 sec. betragen, um eine einwandfreie Verbrennung zu gewährleisten. Bei Einhaltung der erfindungsgemäßen Temperatur und Raumgeschwindigkeitsbereiche ist. dies ohne weiteres gegeben. Die zugesetzte Verbrennungsluftmenge wird insgesamt so bemessen, daß das reduzierende Spaltgas am Ende des Prozesses einen Sauerstoffüberschuß zwischen 1 und 3 % aufweist. Die Größe des Drehrohrofens, der Zwischenkammer und der Nachbrennkammer ergeben sich aus den oben genannten Daten. Sie sollten stets so gestaltet sein, daß das Gasgemisch mit der zugeführten Luft beim Eintritt in die Zwischenkammer und Nachbrennkammer intensiv verwirbelt wird. Ein versetzen von Ein- und Ausgang der Kammern von 90° trägt wesentlich zu dieser Verwirbelung bei.

Wie aus den angegebenen Zahlenwerten für die Raumgeschwindigkeit hervorgeht, ist es vor allem für die Zwischenkammer von entscheidender Bedeutung, da hier einerseits eine gewisse Temperaturspitze erreicht werden muß und andererseits die reduzierenden Bedingungen ausreichend aufrecht

erhalten werden müssen. In den zwei Brennräumen I und II der Nachbrennkammer ist der Spielraum bezüglich Raumgeschwindigkeit, Luftmenge, Temperatur und Verweilzeit etwas breiter, sofern die Mindestbedingungen für eine vollständige Verbrennung eingehalten werden.

Bei richtiger Durchführung des Verfahrens werden die Luftmengen so eingestellt, daß in jedem Teilabschnitt eine Teilverbrennung der brennbaren Gasbestandteile erfolgt aber nicht überschritten wird. Diese Verfahrensweise ermöglicht optimale Temperaturführung und Einhaltung der reduzierenden Atmosphäre in dem Bereich, in dem eine restlose Spaltung des noch vorhandenen $SO_3$ erfolgen muß.

Beim Austritt aus dem Drehrohrofen enthalten die Spaltgase normalerweise zwischen 100 und 300 g/Nm³ brennbare Bestandteile. In der Zwischenkammer sollen höchstens 50 % dieser brennbaren Bestandteile ausbrennen. Zwar dieser hohe Anteil vorzugsweise dann, wenn verhältnismäßig gering mit organischen Bestandteilen belastete Abfallschwefelsäuren verarbeitet werden oder wenn weniger hoch an $SO_2$ konzentrierte Spaltgase erzeugt werden sollen. Normalerweise soll der Ausbrand in der Zwischenkammer zwischen 30 und 45 % betragen, vorzugsweise, möglichst genau eingestellt, zwischen 35 und 40 %.

Beim Eintritt in den Brennraum II sollen noch etwa 10-22 % an brennbaren Bestandteilen, bezogen auf den Ausgangsgehalt an derselben, beim Austritt aus dem Drehrohrofen, vorhanden sein. Der untere Wert bezieht sich, wie vorstehend bereits erwähnt, auf die Verarbeitung organisch niedrig belasteter Abfallschwefelsäuren. Für mittel- und hochbelastete Abfallsäuren gelten Werte zwischen 13 und 18 %.

Durch die Einhaltung dieser Verfahrensbedingungen wird gewährleistet, daß eine vollständige Zersetzung der Schwefelsäure bzw. des daraus gebildeten $SO_3$ eintritt, ohne daß dabei die Entstehung von Stickoxiden in Kauf genommen werden muß.

Das erhaltene Spaltgas ist somit frei von $SO_3$, $NO_X$ und Kohlenwasserstoffen und kann bedenkenlos jedem Schwefelsäurekontaktprozeß zugeführt werden. Es besteht keine Gefahr von Korrosionen im Abhitzekessel sowie in den Wärmeaustauschern einer Kontaktgruppe und, daß unabsorbierbare Schwefelsäurenebel durch katalytische Nachverbrennung von Kohlenwasserstoffen oder durch Bleikammerreaktionen während der Gaswäsche oder hinter dem Endabsorber gebildet werden. Die erzeugte Schwefelsäure ist wasserklar und erhält sogar weniger Verunreinigungen, speziell durch $NO_X$, als eine normale durch Elementarschwefelverbrennung erzeugte Kontaktschwefelsäure.

In den nachfolgenden Beispielen ist das erfindungsgemäße Verfahren näher erläutert.

## Beispiel 1

1.700 kg/h Abfallschwefelsäure mit 70 % $H_2SO_4$, 18,5 % C und 11,5 $H_2O$ sowie 500 kg/h Säureteer, mit 45,3 % C, 6,9 % H, 26 % (6 geb.) O, 13,6 % S und 7,78 % Asche, werden gemeinsam mit 890 kg/h Elementarschwefel am Kopf des Drehrohrofens auf das Koksbett bei einer Temperatur von 500 °C aufgegeben. Die sofort einsetzende Verdampfung und Verbrennung von Schwefel und Kohlenwasserstoffen läuft, gemeinsam mit einer teilweisen Verkokung, der in den Säuren und Säureteeren vorhandenen organischen Verbindungen ab. Die Primärverbrennung im Ofenvorderteil wird durch Einblasen von 3.000 Nm³/h Luft unterhalten. Die Temperatur im mittleren und hinteren Ofenraum stellt sich dadurch auf eine Wert von ca. 1 000 °C ein. Aus dem Drehrohrofen entweichen ca. 700 kg brennbare Bestandteile/h, entsprechend einem durchschnittlichen Gehalt des den Drehrohrofen verlassenden Spaltgases von rund 170 g/Nm³ an brennbaren Stoffen. Beim Übergang des Gases in die Zwischenkammer werden 900 Nm³/h Zusatzluft eingeblasen. Dadurch erhöht sich die Temperatur in der Zwischenkammer auf rund 1 200 °C. Die Raumgeschwindigkeit in der Zwischenkammer beträgt 340-345 Nm³/m³. Nach Verlassen der Zwischenkammer werden den Gasen weitere 2 250 Nm³/h Sekundärluft eingeblasen. Hierdurch sinkt die Temperatur zunächst auf 1 100 °C ab und erhöht sich dann in der Mitte des Brennraums I auf rund 1 150 °C. Unter Berücksichtigung der Zusatzluftmenge ergibt sich hier eine Raumgeschwindigkeit von rund 145. Im Brennraum I sinkt der Gehalt an brennbaren Bestandteilen von rund etwa 110 g/Nm³, beim Eintritt in dieselbe auf ca. 25-30 g/Nm³ beim Übergang in den Brennraum II. Hier werden dem Gas noch weitere 1.300 Nm³ Verbrennungsluft zugesetzt. Die bei einer Raumgeschwindigkeit von 340 zu Ende laufende Verbrennung erhöht die Gastemperatur von vorübergehend wieder ca. 1 100 °C auf 1 120-1 150 °C und damit treten die Gase dann zwecks Abkühlung in Abhitzekesseln ein.

Die Spaltgaszusammensetzung ergibt sich hieraus wie folgt :

10,8 % $SO_2$, 10,8 % $H_2O$, 7,9 % $CO_2$, Rest $N_2$. Stündlich werden ca. 180 kg Koks mit 80 % C und rund 20 % Asche ausgetragen. Die Abgase sind frei von $SO_3$ und Stickoxiden.

## Beispiel 2

1 000 kg/h Säureteer, Zusammensetzung wie unter Beispiel 1, werden gemeinsam mit 425 kg Elementarschwefel am Ofenkopf auf das Koksbett bei einer Temperatur von ca. 500 °C aufgegeben. Die sofort einsetzende Verdampfung und Verbrennung von Schwefel und Kohlenwasserstoffen läuft mit einer teilweisen Verkokung der in dem Säureteer vorhandenen organischen Verbindungen ab. Zur Aufrechterhaltung der Primärverbrennung im Ofenvorderteil werden 3 000 Nm³/h Luft eingeblasen. Die Temperatur im hinteren Ofenraum beträgt 1 050 °C. Die den Drehrohrofen verlassenden Spaltgase enthalten ca. 160 g/Nm³ brennbare Bestandteile. Beim Übergang in die Zwischenkammer werden rund 1 000 Nm³/h

Luft zugesetzt, wodurch sich in der Zwischenkammer eine Temperatur von rund 1 250 °C einstellt. Bei einer Raumgeschwindigkeit von 315 verbrennen die brennbaren Bestandteile auf eine Restmenge von 90-100 g/$Nm^3$, die bei der weiteren Verbrennung im Brennraum I unter Zusatz von weiteren 2 300 $Nm^3$ Luft/h auf einen Restwert von etwa 20-25 g/$Nm^3$ brennbare Bestandteile reduziert werden. Die Temperatur im Brennraum I beträgt in Brennraummitte ca. 1 150 °C, für den Restausbrand der brennbaren Bestandteile werden beim Eintritt in den Brennraum II weitere 1 150 $Nm^3$/h Luft zugesetzt. Die dabei auf etwa 1 000 °C abgekühlten Gase erwärmen sich auf 1 020-1 040 °C bis zum Eintritt in den Abhitzekessel. Die Raumgeschwindigkeiten in den Brennräumen I und II betragen in diesem Falle 135 und 320.

Die Spaltgaszusammensetzung ist wie folgt :

9,5 % $CO_2$, 9,5 % $H_2O$, 4,9 % $SO_2$, 2,5 % $O_2$, Rest $N_2$. Pro Stunde werden rund 50 kg Koks mit 85 % C und 15 % Asche ausgetragen. Die Abgase sind frei von $SO_3$ und Stickoxiden.

Beispiel 3

1 500 kg/h einer Abfallschwefelsäure mit 72 % $H_2SO_4$, 14 % C und 14 % $H_2O$, werden gemeinsam mit 1 667 kg/h Elementarschwefel am Ofenkopf auf das Koksbett bei einer Temperatur von rund 500 °C aufgegeben. Die Primärluftmenge am Ofenkopf wird auf 3 050 $Nm^3$/h eingestellt. Die Spaltgase verlassen mit einer Temperatur von 1 050 °C und einem Gehalt von 260-265 g/$Nm^3$ an brennbaren Bestandteilen den Drehrohrofen, wobei 1 150 $Nm^3$/h Sekundärluft zugesetzt werden. Die Zwischenkammertemperatur stellt sich hierdurch auf rund 1 300 °C ein. Die Menge an brennbaren Bestandteilen beim Verlassen derselben beträgt 150-155 g/$Nm^3$, die Raumgeschwindigkeit 355. Beim Eintritt in den Brennraum I werden weitere 2 300 $Nm^3$ Luft/h eingeblasen, wodurch sich der Gehalt an brennbaren Bestandteilen auf rund 35 g/$Nm^3$ einstellt und die Temperatur in Brennraummitte von vorübergehend 1 100-1 150 auf rund 1 200 °C wieder ansteigt. Für den vollständigen Ausbrand der Kohlenwasserstoffe werden beim Eintritt in den Brennraum II weitere 1 150 $Nm^3$/h Luft zugesetzt und die Gase treten mit 1 150 °C in den Abhitzekessel ein. Sie sind frei von $SO_3$ und Stickoxiden. Die Raumgeschwindigkeit in diesen zwei Brennräumen liegen bei 150 und 340.

Die Spaltgaszusammensetzung ist wie folgt :

16,5 % $SO_2$, 6,0 % $H_2O$, 4,1 % $CO_2$, 2,5 % $O_2$, Rest $N_2$. Der Koksanteil beträgt 30 kg/h mit 80 % C und 20 % Asche.

Beispiel 4

850 kg/h eines Abfallproduktes, enthaltend sulfonierte Aromaten und Thioverbindungen, mit 54,03 % C, 5,64 % H, 30,46 % (geb) O, 9,01 % S und 0,78 % Asche, werden gemeinsam mit 1 000 kg Abfallschwefelsäure am Ofenkopf auf das Koksbett aufgegeben. Die Abfallschwefelsäure besteht aus 80 % $H_2SO_4$, 15 % $H_2O$ und 5 % C. Die Primärverbrennung im Ofenvorderteil wird durch Einblasen von 2 000 $Nm^3$/h Luft eingeleitet. Dabei wird ein Teil der organischen Verbindungen unter Verkokung ihres Kohlenstoffgehaltes zersetzt. Die Temperatur im hinteren Ofenraum erreicht ca. 1 000 °C, die den Drehrohrofen verlassenden Spaltgase enthalten rund 100-120 g/$Nm^3$ brennbare Bestandteile. Beim Übergang in die Zwischenkammer werden 700 $Nm^3$/h Luft zugesetzt. Die Temperatur in derselben erreicht 1 150 °C. Beim Übergang in den Brennraum I enthalten die Spaltgase nur noch 50-60 g/$Nm^3$ brennbare Bestandteile. Der Luftzusatz wird auf 1 450 $Nm^3$/h eingestellt. Die Temperatur in der Brennraummitte erreicht 1 125 °C. Beim Übergang in den Brennraum II enthalten die Spaltgase noch ca. 10-15 g/$Nm^3$ brennbarer Bestandteile, zu deren Ausbrand noch einmal 650 $Nm^3$/h Luft zugesetzt werden. Die erreichte Endtemperatur liegt bei 1 100-1 130 °C.

Bei diesem Beispiel erreichen die Raumgeschwindigkeiten folgende Werte :

Zwischenkammer 245, Brennraum I 100, Brennraum II 125.

Die Spaltgaszusammensetzung ergibt sich zu :

14,8 % $CO_2$, 4,1 % $SO_2$, 16,4 % $H_2O$, 2,3 % $O_2$, Rest $N_2$. Der Koksanfall beläuft sich auf 72 kg/h mit 90 % C und rund 10 % Asche. Die Abgase sind frei von $SO_3$ und Stickoxiden.

**Ansprüche**

1. Verfahren zur Aufarbeitung von Abfallschwefelsäuren, Säureteeren und ähnlichen Schwefel und Kohlenstoff enthaltenden Abfallprodukten unterschiedlicher Zusammensetzung und Konsistenz in einem mehrstufigen Verbrennungsofen, dadurch gekennzeichnet, daß man :

a) in einer ersten Stufe die Abfallschwefelsäure, Säureteere und ähnliche Schwefel- und Kohlenstoff enthaltenden Abfallprodukte unterschiedlicher Zusammensetzung und Konsistenz gegebenenfalls zusammen mit elementarem Schwefel in einem Drehrohrofen (5) auf ein Koksbett von mindestens 400 °C aufgibt und 25 bis 55 % der insgesamt für das Verfahren erforderlichen Luft als Primärluft einbläst, so daß das entstehende reduzierende Gemisch und der hintere Teil des Koksbettes sich auf 800 bis 1 100 °C erwärmen, wobei der gegebenenfalls sich bildende überschüssige Koks am Ende des Drehrohrofens ausgetragen wird, das Gasgemisch,

b) in einer zweiten Stufe, in einer Zwischenkammer (6) mit weiteren 10 bis 15 % der erforderlichen Luft versetzt, wobei eine Raumgeschwindigkeit von 200 bis 400 $Nm^3$ $Gas/m^3$ Brennerraum eingehalten wird und sich die Temperatur des Gasgemisches auf 1 150 bis 1 350 °C erhöht,

c) in einer dritten Stufe am Anfang einer Nachbrennkammer (9) weitere 20 bis 45 % der erforderlichen Luft zugibt, wobei eine Raumgeschwindigkeit von 50 bis 180 $Nm^3$ $Gas/m^3$ Brennraum eingehalten wird und sich das Gasgemisch auf 1 000 bis 1 200 °C abkühlt, und schließlich,

d) in einer vierten Stufe etwa in der Mitte der Nachbrennkammer (9) den Rest der erforderlichen Luft zugibt, wobei sich im hinteren Teil der Nachbrennkammer (9) Temperaturen von 1 000 bis 1 200 °C einstellen und eine Raumgeschwindigkeit von 150 bis 400 $Nm^3$ $Gas/m^3$ Brennraum eingehalten werden, woraufhin man das durchreagierte Gasgemisch in an sich bekannter Weise in einem Abhitzekessel abkühlt und vorzugsweise in einem Schwefelsäure-Kontaktverfahren zu Schwefelsäure aufarbeitet.

2. Verfahren gemäß Anspruch 1, dadurch gekennzeichnet, daß man in der Stufe (a) vorzugsweise 35 bis 45 % der erforderlichen Luft einbläst und Temperaturen von ca. 500 °C beim Eintritt und ca. 1 000 °C beim Austritt einstellt, in der Stufe (b) vorzugsweise Temperaturen von 1 200 bis 1 300 °C und Raumgeschwindigkeiten von 220 bis 360 $Nm^3$ $Gas/m^3$ Brennraum einhält, in der Stufe (c) vorzugsweise 25 bis 35 % der erforderlichen Luft einbläst und damit Temperaturen von 1 100 bis 1 150 °C und Raumgeschwindigkeiten von 80 bis 150 $Nm^3$ $Gas/m^3$ Brennraum einhält, und in der Stufe (d) die Temperaturen vorzugsweise bei 1 100 bis 1 150 °C sowie die Raumgeschwindigkeiten bei 200 bis 350 $Nm^3$ $Gas/m^3$ Brennraum einstellt.

3. Verfahren nach Ansprüche 1 oder 2, dadurch gekennzeichnet, daß man bei Gesamt-Verweilzeiten in den Vor- und Hauptverbrennungsräumen von 5 bis 11, vorzugsweise 6 bis 8,5 Sekunden, nach Zusatz der Restmenge der Luft in der Stufe (d) noch eine Verweilzeit von 1,5 bis 3,0 Sekunden einhält.

4. Vorrichtung zur Durchführung des Verfahrens nach Ansprüchen 1 bis 3, bestehend aus :

a) einem Drehrohrofen (5) mit getrennten Zuführungen für Abfallsäuren (1), Säureteeren und ähnlichen Schwefel- und Kohlenstoff enthaltenden Abfallprodukten (2), elementarem Schwefel (3) und Primärluft (4) sowie einem Koksaustrag (7),

b) einer Zwischenkammer (6) mit Sekundär- Lufteinblasung (8),

c) einer Nachbrennkammer (9) mit zwei weiteren Sekundär-Lufteinblasungen (8) und einem Abhitzekessel (10).

5. Vorrichtung gemäß Anspruch 4, dadurch gekennzeichnet, daß der Koksaustrag (7) als Ringspalt ausgebildet ist.

6. Vorrichtung gemäß Ansprüchen 4 oder 5, dadurch gekennzeichnet, daß zwecks intensiver Verwirbelung von Gasgemisch und Sekundärluft nach Eintritt in die Zwischenkammer (6) und Nachbrennkammer (9) Eingang und Ausgang dieser Kammern um 90 °C versetzt sind.

**Claims**

1. A process for reprocessing waste sulfuric acids, acid tars and similar sulfur-containing and carbon-containing waste products of varying compositions and consistencies in a multi-step combustion furnace, characterized in that :

a) the waste sulfuric acid, acid tars and similar sulfur-containing and carbon-containing waste products of varying compositions and consistencies, optionally together with elemental sulfur, are charged into a coke bed of 400 °C in a rotary kiln (5), and 25 to 55 % of the air totally required for the process is blown in as primary air so that the resulting reductive mixture and the rear part of the coke bed are heated to from 800 °C to 1 100 °C, while the excess coke having possibly been formed is discharged at the end of the rotary kiln, in a first step,

b) another 10 to 15 % of the required air is added to the gas mixture in an intermediate chamber (6), while a space velocity of 200 to 400 $m^3$ (normal conditions) of gas per $m^3$ of burner volume is maintained and the temperature of the gas mixture is increased to from 1 150 °C to 1 350 °C, in a second step,

c) another 20 to 45 % of the required air is added at the upstream end of an afterburning chamber (9), while a space velocity of 50 to 180 $m^3$ (normal conditions) of gas per $m^3$ of burner volume is maintained and the gas mixture is cooled to from 1 000 °C to 1 200 °C, in a third step, and, finally,

d) the remainder of the required air is added at about the central section of the afterburning chamber (9), while temperatures of from 1 000 °C to 1 200 °C are adjusted in the rear part of the afterburning chamber (9) and a space velocity of 150 to 400 $m^3$ (normal conditions) of gas per $m^3$ of burner volume is maintained, in a fourth step,

whereupon the gas mixture having completely undergone reaction is cooled in a waste-heat boiler in a per se known manner and is preferably reprocessed in a sulfuric acid contact process to give sulfuric acid.

2. A process according to claim 1, characterized in that preferably 35 to 45 % of the required air is blown in and temperatures of about 500 °C at the inlet and about 1 000 °C at the outlet are adjusted in step (a), preferably temperatures of from 1 200 °C to 1 300 °C and space velocities of from 220 to 360 $m^3$ (normal conditions) of gas per $m^3$ of burner volume are maintained in step (b), preferably 25 to 35 % of the required air is blown in and, thereby, temperatures of from 1 100 °C to 1 150 °C and space velocities of

from 80 to 150 $m^3$ (normal conditions) of gas per $m^3$ burner volume are maintained in step (c), and preferably temperatures of from 1 100 °C to 1 150 °C and space velocities of from 200 to 350 $m^3$ (normal conditions) per $m^3$ of burner volume are adjusted in step (d).

3. A process according to any one of claims 1 and 2, characterized in that after the addition of the remainder air a residence time of from 1.5 to 3 s is maintained in step (d), the total residence times in the pre-combustion and main combustion spaces being from 5 to 11 s, and preferably from 6 to 8.5 s.

4. A device for carrying out the process according to claims 1 through 3, comprising :

a) a rotary kiln (5) provided with separate supplies for waste acids (1), acid tars and similar sulfur-containing and carbon-containing waste products (2), elemental sulfur (3), and primary air (4), and a coke discharge means (7),

b) an intermediate chamber (6) equipped with an inlet for introducing secondary air (8),

c) an afterburning chamber (9) equipped with two more inlets for introducing secondary air (8) and a waste-heat boiler (10).

5. A device according to claim 4, characterized in that the coke discharge means (7) is formed as an annular clearance.

6. A device according to any one of claims 4 and 5, characterized in that the inlets and outlets, respectively, of the intermediate chamber (6) and the afterburning chamber (9) are in positions staggered by 90° relative to each other such as a thorough vortexing to be accomplished of the gas mixture and the secondary air upon the entry thereof in either of said chambers.

**Revendications**

1. Procédé pour le traitement d'acides sulfuriques résiduaires, de goudrons acides et de sous-produits sulfurés et carbonés similaires de composition et de consistance différentes dans un four à combustion multi-étages, caractérisé en ce que :

a) on charge, dans un premier stade, l'acide sulfurique résiduaire, les goudrons acides et les sous-produits sulfurés et carbonés similaires de composition et de consistance différentes, éventuellement avec du soufre élémentaire, dans un four tubulaire rotatif (5) sur un lit de coke d'au moins 400 °C et qu'on insuffle, comme air primaire, 25 à 55 % de l'air total nécessaire au procédé de manière à ce que le mélange réducteur résultant et la partie arrière du lit de coke s'échauffent jusqu'à 800-1 000 °C, le coke en excès éventuellement formé étant évacué à l'extrémité du four tubulaire rotatif,

b) dans un deuxième stade, on ajoute au mélange gazeux, dans une chambre intermédiaire (6), les 10 à 15 % suivants de l'air nécessaire, moyennant quoi on maintient une vitesse spatiale de 200 à 400 $Nm^3$ de gaz/$m^3$ d'espace de combustion et la température du mélange gazeux s'élève à 1 150-1 350 °C,

c) que, dans un troisième stade, on introduit à l'entrée d'une chambre de postcombustion (9) les 20 à 45 % suivants de l'air nécessaire, moyennant quoi on maintient une vitesse spatiale de 50 à 180 $Nm^3$ de gaz/$m^3$ d'espace de combustion et le mélange gazeux se refroidit à 1 000-1 200 °C,

d) finalement, dans un quatrième stade, on introduit approximativement au milieu de la chambre de postcombustion (9) le restant de l'air nécessaire, moyennant quoi il s'établit dans la partie arrière de la chambre de postcombustion (9) des températures de 1 000 à 1 200 °C et on maintient une vitesse spatiale de 150 à 400 $Nm^3$ de gaz/$m^3$ d'espace de combustion,

après quoi on refroidit de façon connue en soi le mélange gazeux ayant réagi dans une chaudière à chaleur perdue et le transforme de préférence en acide sulfurique par un procédé de contact.

2. Procédé selon la revendication 1, caractérisé en ce qu'on insuffle dans le premier stade (a), de préférence 35 à 45 % de l'air nécessaire et on règle les températures à environ 500 °C à l'entrée et à environ 1 000 °C à la sortie, on maintient au stade (b), de préférence des températures de 1 200 à 1 300 °C et des vitesses spatiales de 220 à 360 $Nm^3$ de gaz/$m^3$ d'espace de combustion, insuffle au stade (c), de préférence 25 à 35 % de l'air nécessaire et on maintient ainsi des températures de 1 100 à 1 150 °C et des vitesses spatiales de 80 à 150 $Nm^3$ de gaz/$m^3$ d'espace de combustion et que, au stade (d), on règle les températures, de préférence entre 1 100 et 1 150 °C ainsi que les vitesses spatiales entre 200 et 350 $Nm^3$ de gaz/$m^3$ d'espace de combustion.

3. Procédé selon l'une des revendications 1 ou 2, caractérisé en ce que, pour des temps de séjour totaux de 5 à 11, de préférence de 6 à 8,5 secondes dans les zones de précombustion et de combustion principale, on observe encore, après addition du restant de l'air au stade d), un temps de séjour de 1,5 à 3,0 secondes.

4. Dispositif pour la réalisation du procédé selon les revendications 1 à 3, caractérisé en ce qu'il comprend :

a) un four tubulaire rotatif (5) comportant des arrivées séparées pour les acides résiduaires (1), les goudrons acides et des sous-produits sulfurés et carbonés similaires (2), pour le soufre élémentaire (3) et l'air primaire (4) ainsi qu'une évacuation de coke (7),

b) une chambre intermédiaire (6) avec insufflation d'air secondaire (8),

c) une chambre de postcombustion (9) avec deux autres injections d'air secondaire (8) et une chaudière à chaleur perdue (10).

5. Dispositif selon la revendication 4, caractérisé en ce que la décharge de coke (7) à la forme d'une fente circulaire.

6. Dispositif selon l'une des revendications 4 ou 5, caractérisé en ce que, en vue d'une fluidisation intense du mélange gazeux et de l'air secondaire après admission dans la chambre intermédiaire (6) et la chambre de postcombustion (9), l'entrée et la sortie de ces chambres sont déplacées de 90°.

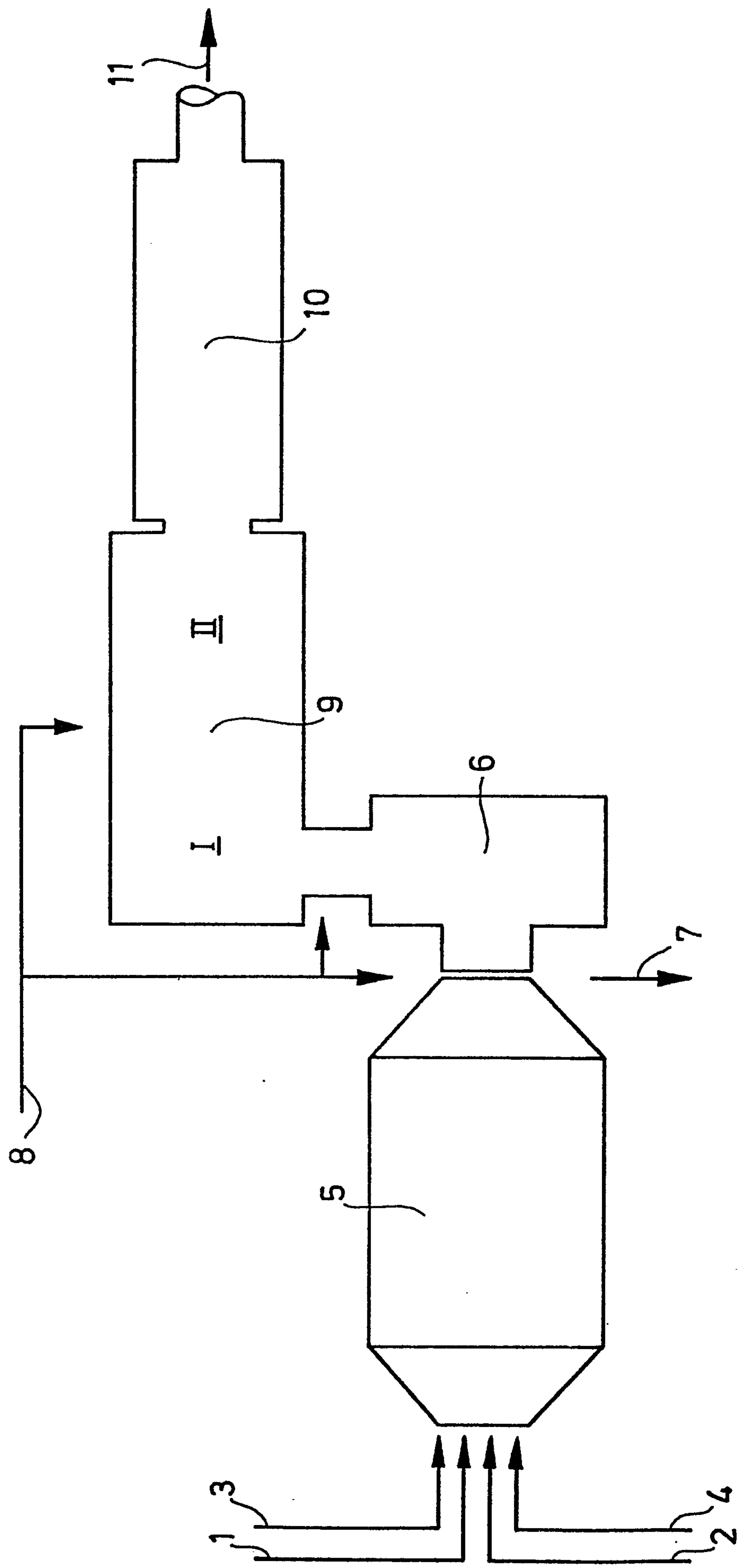

11
10
II
9
6
I
7
8
5
3
1
4
2